Europäisches Patentamt

European Patent Office

Office européen des brevets

(19)

(11) Veröffentlichungsnummer: **0 073 285**
**B1**

(12) # EUROPÄISCHE PATENTSCHRIFT

(45) Veröffentlichungstag der Patentschrift:
**14.05.86**

(21) Anmeldenummer: **81810352.5**

(22) Anmeldetag: **27.08.81**

(51) Int. Cl.⁴: **B 62 D 27/06, E 05 C 9/08**

(54) **Verschlussvorrichtung für klappbare Bordwände eines Transportmittels, insbesondere eines Lastzuges.**

(43) Veröffentlichungstag der Anmeldung:
**09.03.83 Patentblatt 83/10**

(45) Bekanntmachung des Hinweises auf die Patenterteilung:
**14.05.86 Patentblatt 86/20**

(84) Benannte Vertragsstaaten:
**AT BE CH DE FR GB IT LI LU NL SE**

(56) Entgegenhaltungen:
**CH - A - 497 633**
**DE - A - 2 847 744**
**DE - U - 1 891 283**
**DE - U - 1 985 489**

(73) Patentinhaber: **Peter Wenger SA, Route de Neuchâtel,
CH-1530 Payerne (Kanton Waadt) (CH)**

(72) Erfinder: **Schäfer, Götz, Rue des Lilas 6,
CH-1530 Payerne (Kanton Waadt) (CH)**

(74) Vertreter: **Velgo, Miroslav et al, Bovard AG
Patentanwälte VSP Optingenstrasse 16,
CH-3000 Bern 25 (CH)**

**Beschreibung**

Die Erfindung geht aus von einer Verschlussvorrichtung für klappbare Bordwände eines Transportmittels, insbesondere eines Lastzuges, mit einer in einem im Querschnitt U-förmigen, die Bordwände abschliessenden Profil drehbar gelagerten, mindestens ein Zwischenlager aufweisenden Vertikalwelle und einem senkrecht zur Welle verlaufenden, mit dem Zwischenlager einstückigen Haltestück eines Verriegelungshebels, der am Haltestück in vertikaler Ebene abklappbar befestigt ist und dessen freier Endteil hinter einer an einer Bordwand der Bordwände befestigten Schlaufe hineinschwenkbar ist, wobei das Haltestück in einer Ausnehmung in der vorderen Abschlussprofilwand durch die Betätigung des Verriegelungshebels in horizontaler Ebene begrenzt ausschwenkbar ist.

Eine solche Verschlussvorrichtung ist in der EP-B-10 065 beschrieben.

Die DE-U-1 891 283 umschreibt einen Bordwandverschluss, in dem eine Achse zur Verriegelung/Freigebung des Verschlusses durch Drehung einer Schlossnuss mittels eines Zahnmechanismus hin und her bewegt wird. Der Zahnmechanismus enthält Zähne an der Schlossnuss, die mit entsprechenden Zahnnuten der Achse zusammenwirken. Die Drehbewegung der Schlossnuss wird in die lineare Bewegung der Achse umgewandelt. Der Verschluss besitzt einen Schlosskasten, der an der Bordwand befestigt ist. Eine solche Anordnung des Verschlusses kann aber erhöhten Ansprüchen an Einsatzfähigkeit des Verschlusses, insbesondere bei einem Lastzug, nicht genügen.

Der im Patentanspruch 1 angegebenen Erfindung liegt die Aufgabe zugrunde, die bekannte Verschlussvorrichtung in dem Sinne zu verbessern, dass sie in jeder Höhe der Bordwände eingebaut werden kann, wobei durch die Verschlussvorrichtung auch das sog. Ausbeulen der Bordwände durch z.B. Schüttgut oder sonstige Materialien, die während des Transportes gegen die Bordwände drücken, vermieden werden soll. Die Verschlussvorrichtung soll aus einfachen Bestandteilen bestehen, robust und in jeder Situation wirkungsvoll einsatzfähig sein.

Die Aufgabe wird bei einer Verschlussvorrichtung nach dem Oberbegriff des Patentanspruches 1 dadurch gelöst, dass im Abschlussprofil ein flacher, mit Einschnitten versehener Schubriegel frei eingesetzt ist, der in einem in der Abschlussprofilstirnwand vorgesehenen, axialen Schlitz senkrecht zur Welle führbar ist, und dass das Zwischenlager einen Teilzahnkranz aufweist, dessen Zähne in die Einschnitte des Schubriegels eingreifen.

Der Erfindungsgegenstand wird nachstehend anhand der Zeichnungen beispielsweise näher erläutert. Es zeigen

Fig. 1 eine Ansicht einer Verschlussvorrichtung, deren Vertikalwelle in einem Abschlussprofil untergebracht ist, welches Profil sich zwischen dem Mittelpfosten und den Bordwänden eines Lastwagens befindet,

Fig. 2 eine Draufsicht auf die Verschlussvorrichtung im Schnitt entlang der Linie II–II der Fig. 1, im grösseren Massstab,

Fig. 3 eine Draufsicht, teilweise im Schnitt, auf den Teilzahnkranz entlang der Schnittlinie III–III der Fig. 1,

Fig. 4 eine gesprengte perspektivische Darstellung der Verschlussvorrichtung nach der Fig. 1,

Fig. 5 eine Ansicht einer anderen Ausführungsform der Verschlussvorrichtung,

Fig. 6 eine Draufsicht auf die Verschlussvorrichtung im Schnitt, mit zwei vertikal geteilten Bordwänden ohne Mittelpfosten,

Fig. 7 eine Draufsicht auf die Verschlussvorrichtung nach der Fig. 1,

Fig. 8 eine Draufsicht auf die Verschlussvorrichtung im Schnitt mit einem Einbau beim Stirnwandpfosten,

Fig. 9 eine Draufsicht auf zwei Verschlussvorrichtungen, deren eine in der Seitenwand und die andere in der Rückwand angeordnet ist,

Fig. 10 eine Draufsicht auf die Verschlussvorrichtung, die in der Rückwand auf andere Weise als diejenige nach der Fig. 9 angeordnet ist.

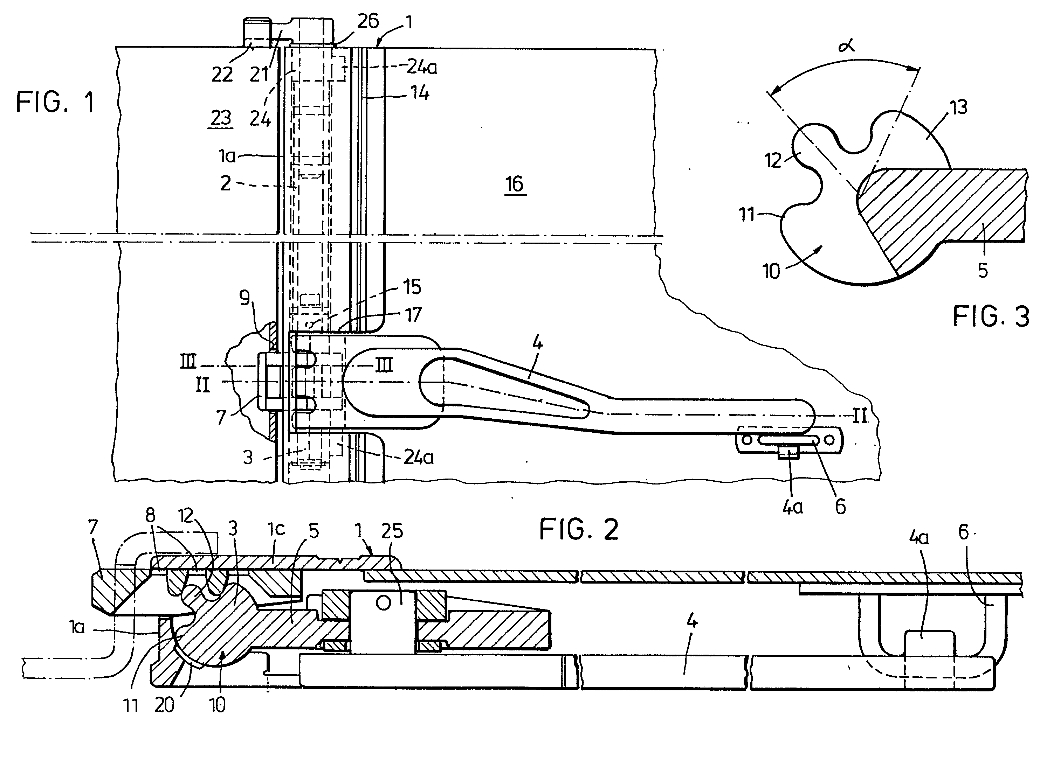

Die in den Figuren dargestellten Verschlussvorrichtungen sind für klappbare Bordwände eines Transportmittels, insbesondere eines Lastwagens und dessen Anhängers, bestimmt. Sie enthalten in allen Ausführungsformen eine Vertikalwelle 2, die in einem Abschlussprofil 1 drehbar gelagert ist. Das Abschlussprofil 1 ist im Querschnitt im wesentlichen ein U-förmiges, vertikal verlaufendes Profil, durch welches die Bordwände 16 z.B. eines Lastwagens abgeschlossen sind (siehe Fig. 2). Die Abschliessung geschieht mittels nicht dargestellter Hohlnieten, die in die Längskerben 14 auf der vorderen 1b und der hinteren 1c Wand des aus Aluminiumlegierung bestehenden Abschlussprofils 1 angebracht werden. Die Befestigung kann aber auch z.B. mittels Schrauben bewerkstelligt werden.

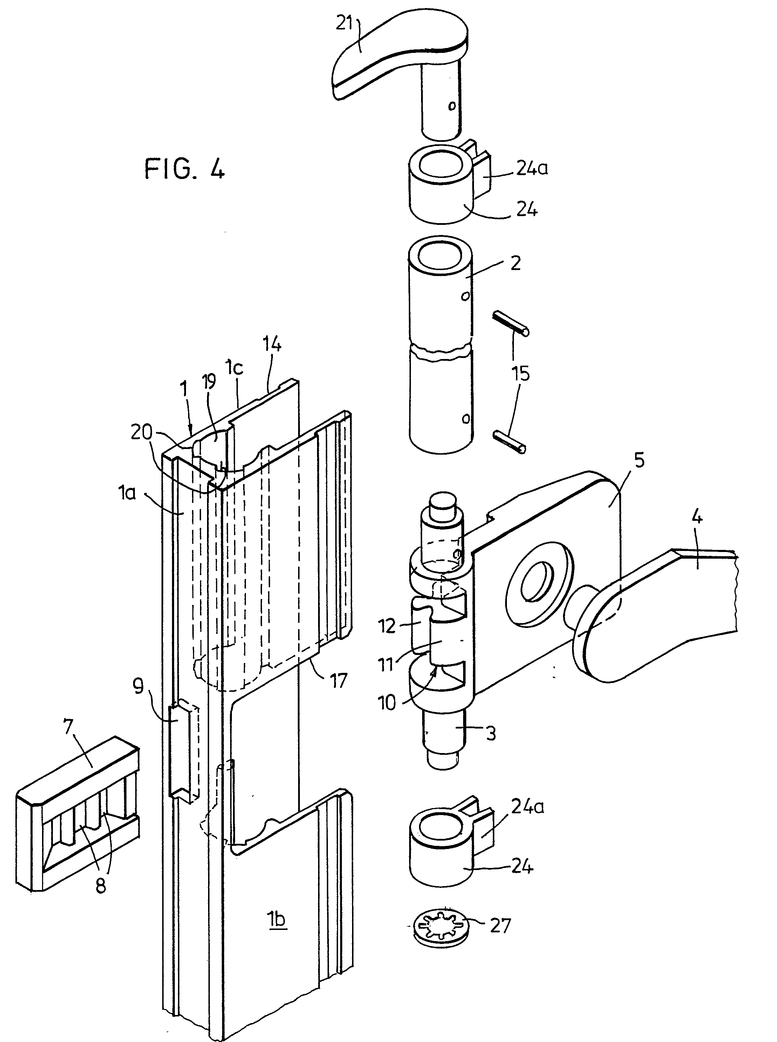

Die Vertikalwelle 2 ist in einem das Abschlussprofil 1 durchlaufenden rohrförmigen Innenteil 19, der über seine gesamte Länge axial geschlitzt ist, drehbar eingesetzt. Mit dem oberen Ende der Welle 2 ist nach den Fig. 1, 4 und 6 bis 10 ein senkrecht zu ihr verlaufender Haltenocken 21 drehfest verbunden. Der Haltenocken 21 greift in der verriegelten Stellung der Verschlussvorrichtung hinter einen am Mittelpfosten 23 befestigten vertikalen Zapfen 22, wie z.B. aus der Fig. 1 ersichtlich ist. Die Vertikalwelle 2 ist in dem rohrförmigen Innenteil 19 mittels Kunststofflagern 24 mit jeweils zwei Nocken 24a gehalten. Durch diese Nocken wird die Verschlussvorrichtung im Abschlussprofil 1 arretiert, weil sie gegen die Materialstärke des Bordwandprofils drücken. Im unteren Bereich der Verschlussvorrichtung ist das Kunststofflager mit einem Haltering 27 auf dem Zwischenlager 3 fixiert. Die Lager 24 bestehen aus Polyamid und sind selbstschmierend.

Der Haltenocken 21 kann einstückig mit der Vertikalwelle 2 ausgebildet sein. Er kann aber auch separat von der Welle 2 geliefert werden, wonach er erst am Transportmittel – je nach Bedingungen – an die Welle 2 angeschweisst wird. Um die Beschädigung des oberen Kunststofflagers 24 beim Schweissen zu verhindern, ist an der Welle 2 unmittelbar unter dem Haltenocken 21 eine Messingscheibe 26 vorgesehen.

Bei der Ausführungsform nach der Fig. 1 ist am unteren Ende der Vertikalwelle 2, die nur teilweise über die Länge des Abschlussprofils 1 verläuft, ein Zwischenlager 3 mit einem senkrecht zur Welle 2 hinausragenden, mit dem Zwischenlager 3 einstückigen Haltestück 5 drehfest befestigt. Am Haltestück 5 ist ein Verriegelungshebel 4 in einem Schwenklager 25 in vertikaler Ebene abklappbar befestigt. Der freie Endteil 4a des Verriegelungshebels 4 ist hinter einer an einer Bordwand der Borwände 16 befestigten Schlaufe 6 hineinschwenkbar. Die Bordwand, an welcher die Schlaufe 6 befestigt ist, ist gegenüber den benachbarten Bordwänden versenkt angeordnet, so dass der Verriegelungshebel 4 im Verriegelungszustand nicht aus der Ebene der Borwände 16 hinausragt. Durch die schwenkbare Befestigung des Verriegelungshebels 4 am Haltestück 5 kann er im unverriegelten Zustand der Vorrichtung in vertikaler Ebene abgeklappt werden. Somit wird die Verletzungsgefahr durch den aus den Bordwänden 16 herausragenden Verriegelungshebel, die bei bekannten Verschlussvorrichtungen immer noch besteht, wesentlich herabgesetzt. Mit 15 sind Befestigungsnieten bezeichnet.

Die vordere Wand 1b des Abschlussprofils 1 ist im Bereich des Zwischenlagers 3 in der Breite des mit dem Zwischenlager 3 einstückig verbundenen Haltestückes 5 in Form einer Ausnehmung 17 ausgeschnitten, um das Ausschwenken des Haltestückes 5 in horizontaler Ebene durch die Betätigung des Verriegelungshebels 4 zu ermöglichen. Das Haltestück 5 ist im Bereich von etwa 100° horizontal ausschwenkbar.

Im Abschlussprofil 1 ist ein flacher, mit Einschnitten 8 versehener Schubriegel 7 frei eingesetzt. Er liegt an der hinteren Wand 1c des Abschlussprofiles 1 an. Er ist durch einen in der Abschlussprofilstirnwand 1a vorgesehenen axialen Schlitz 9 senkrecht zur Welle 2 geführt. Des weiteren ist er geführt durch die Kanten des im Bereich des Schubriegels 7 abgetragenen Innenteiles 19 auf der hinteren Wand 1c. Somit wird eine begrenzte Hin- und Herbewegung des Schubriegels 7 an der hinteren Abschlussprofilwand 1c ermöglicht.

Das Zwischenlager 3 weist einen Teilzahnkranz 10 auf, dessen Zähne 11 bis 13 in die Einschnitte 8 des Schubriegels 7 eingreifen. Die Einschnitte 8 sind entsprechend der Form der Zähne 11 bis 13 gestaltet. Durch die Drehbewegung des Verriegelungshebels 4 und somit des Zwischenlagers 3 wird der Schubriegel 7 durch das Eingreifen der Zähne 11 bis 13 in die Einschnitte 8 in horizontaler Ebene hin- und herbewegt. Auf diese Weise werden die Bordwände 16 am Mittelpfosten 23 durch die Umwandlung der Drehbewegung in Schubbewegung verriegelt. Die Form der Einschnitte 8 des Schubriegels 7 ist der Form der Zähne 11 bis 13 angepasst, so dass die Umwandlung der Drehbewegung in die Schubbewegung mühelos vor sich geht.

Der Teilzahnkranz 10 weist drei Zähne 11, 12, 13 auf. Der mittlere Zahn 12 ist vollständig als Zahn ausgebildet, wogegen die beiden äusseren Zähne 11, 13 jeweils nur eine dem mittleren Zahn 12 zugewandte Zahnflanke aufweisen. Der Teilungswinkel zweier benachbarter Zähne 11, 12; 12, 13 beträgt 72°. Sowohl der Zahnkranz 10 als auch der Schubriegel 7 bestehen aus vergütetem Stahl.

Um den Austritt von Wasser und Schmutz jeder Art zu ermöglichen, sind im rohrförmigen Innenteil 19 in der Nähe der Abschlussprofilstirnwand 1a zwei voneinander entfernte kanalförmige Aussparungen 20 vorgesehen. Sonst ist der Innenteil 19 mit einer vollen glatten Fläche ausgebildet, die das Eindringen von losen Gütern, wie Körnern, Schmutz, verhindert.

Alle Teile der Verschlussvorrichtung, ausser des Abschlussprofils 1, werden in Serienproduktion geschmiedet; sie weisen deshalb keine Schweissstellen auf. Durch diese Tatsache wird die Verzinkung aller Teile wesentlich erleichtert. Die Aussenflächen des Mittelpfostens 23, des Abschlussprofils 1 und der Bordwände 16, mit der Ausnahme der teilweise versenkten Bordwand mit der Schlaufe 6, sind bündig. Das Abschlussprofil 1 ist ein stranggezogenes Profil.

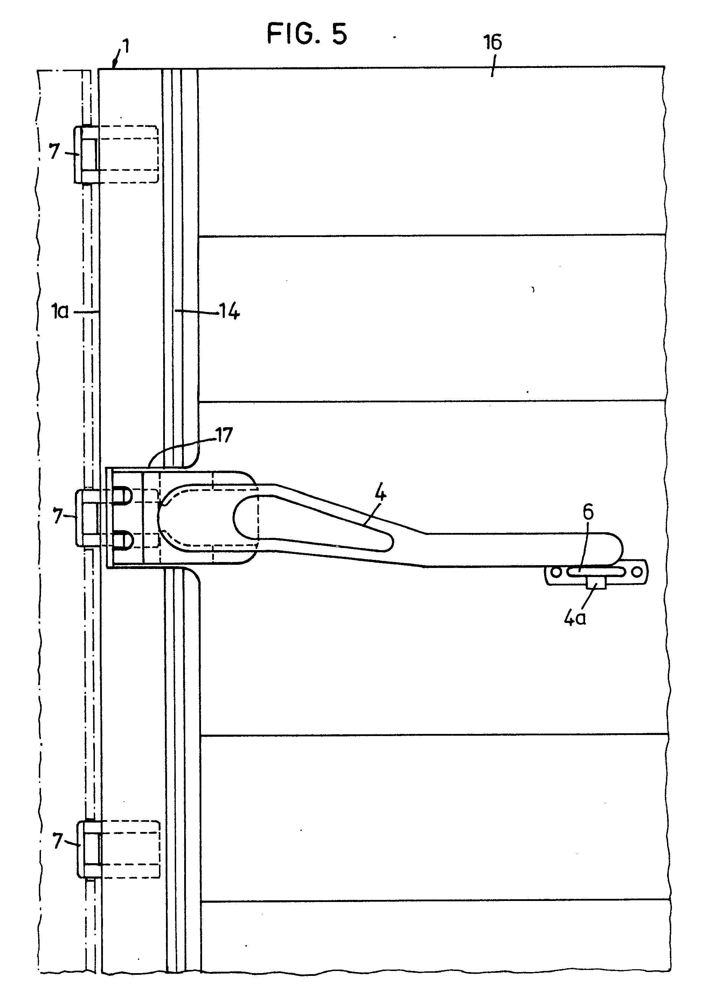

Bei der zweiten Ausführungsform nach der Fig. 5 läuft die Vertikalwelle 2 über die ganze Länge des Abschlussprofils 1 und weist mehrere Zwischenlager 3 auf (in der Fig. 5 drei). Eine solche Ausführungsform kann auch zusätzlich links und rechts einen Haltenocken 21 aufweisen. Die Ausführungsform eignet sich insbesondere für seitliche Bordwände, die in horizontaler Ebene in zwei Teile geteilt sind.

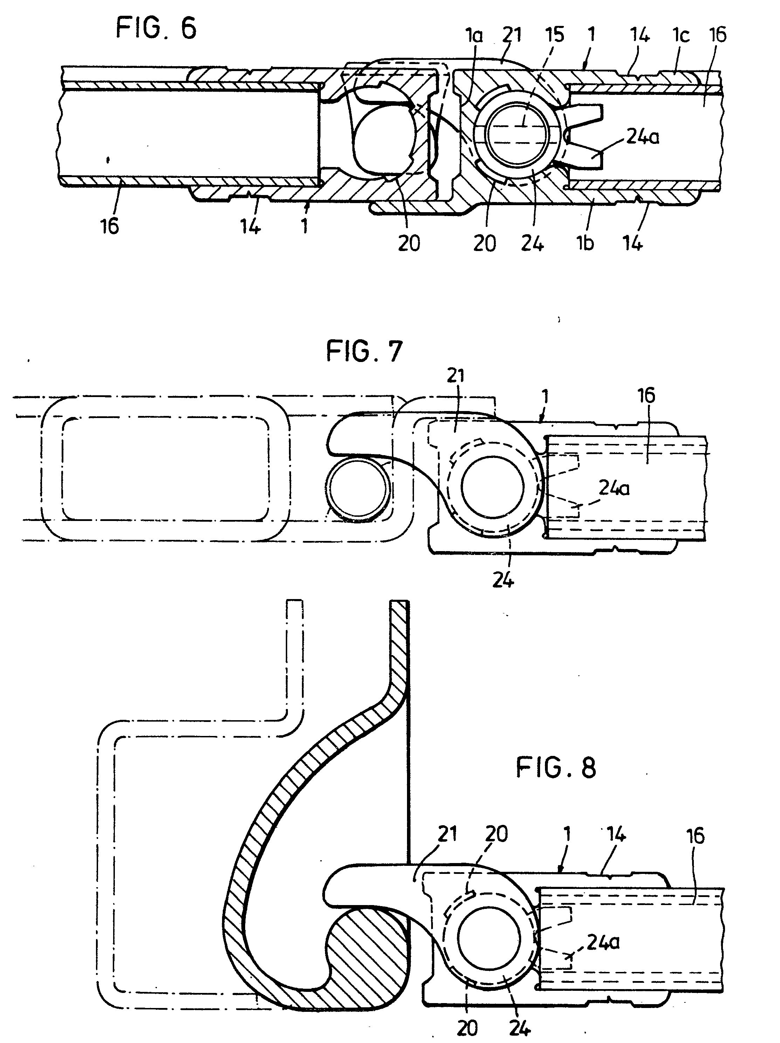

Die Ausführungsform nach den Fig. 6 und 7 ist für Bordwände bestimmt, die zwischen zwei Pfosten vertikal geteilt sind. Die Vertikalwelle 2 weist oben sowie unten je einen Haltenocken 21 auf.

In der Fig. 8 ist eine Mulde am Eckpfosten zum Einhaken des Haltenockens vorgesehen.

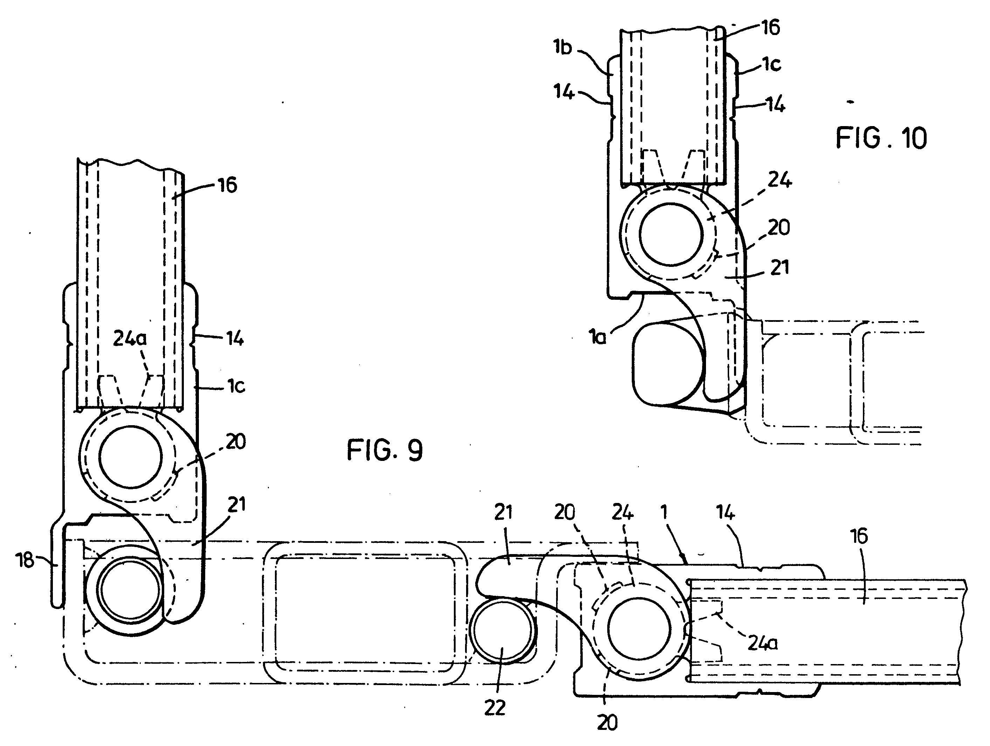

Die Ausführungsform nach den Fig. 9 und 10 ist für Eckpfosten der Stirnbordwand bestimmt. Das Abschlussprofil 1 weist hier eine mit ihm einstückige Rippe 18 auf, die von der Stirnwand 1a ausläuft und zur Aussenfläche der vorderen Wand 1b des Abschlussprofils 1 parallel, jedoch in Gegenrichtung zu derselben verläuft; sie stützt sich an dem Eckpfosten oder am Abschlussprofil (Fig. 6) ab.

Durch die Möglichkeit der Umwandlung der Dreh- in Schubbewegung kann die oben beschriebene Verschlussvorrichtung in jeder Höhe der Bordwände eingebaut werden. Der Schubriegel ist frei einsetzbar, jedoch automatisch gesichert, sobald alle Funktionsteile der Verschlussvorrichtung im Abschlussprofil eingebaut sind. Durch den axialen Schlitz in der Stirnwand des Abschlussprofils wird dasselbe keineswegs geschwächt. Da die Vertikalwelle mit den Verschlussteilen im Abschlussprofil eingebaut ist, können die Mittel- bzw. Eckpfosten frei gestaltet werden.

Beim Verriegeln der Verschlussvorrichtung mit einem Haltenocken wird wie folgt vorgegangen. Der Verriegelungshebel 4, der aus einem Flachprofil besteht, wird in Richtung der versenkten Bordwand der Bordwände 16 gedrückt und in dieser Stellung nach unten mit seinem Endteil 4a hinter die Schlaufe 6 hineingeschoben. Beim Abstützen des Haltenockens 21 gegen den vertikalen Zapfen 22 entsteht nämlich eine Vorspannung von etwa 30 mm, so dass der Verriegelungshebel 4 mit dem Haltestück 5 elastisch verborgen werden muss; dies geschieht mit der offenen Hand des Bedienenden. Nach dem Hineinschieben des Endteiles 4a in die Schlaufe 3, drückt derselbe durch die Wirkung der Vorspannung gegen die Schlaufe 6, so dass er während der Fahrt in der Schlaufe 6 sicher verriegelt ist.

Die Montage und Demontage dieser Verschlussvorrichtung geht schnell vor sich, weil die Verschlussvorrichtung komplett einbaufertig geliefert wird. Die beschriebene Vorrichtung stellt eine ästhetische Lösung bei der Verwendung von Verschlussvorrichtungen dar.

**Patentansprüche**

1. Verschlussvorrichtung für klappbare Bord- wände eines Transportmittels, insbesondere ei- nes Lastzuges, mit einer in einem Querschnitt im wesentlichen U-förmigen, die Bordwände (16) abschliessenden Profil (1) drehbar gelagerten, mindestens ein Zwischenlager (3) aufweisenden Vertikalwelle (2) und einem senkrecht zur Welle (2) verlaufenden, mit dem Zwischenlager (3) einstükkigen Haltestück (5) eines Verriegelungshebels (4), der am Haltestück (5) in vertikaler Ebene abklappbar befestigt und dessen freier Endteil (4a) hinter einer an einer Bordwand der Bordwände (16) befestigten Schlaufe (6) hineinschwenkbar ist, wobei das Haltestück (5) in einer Ausnehmung (17) in der vorderen Abschlussprofilwand (1b) durch die Betätigung des Verriegelungshebels (4) in horizontaler Ebene begrenzt ausschwenkbar ist, dadurch gekennzeichnet, dass im Abschlussprofil (1) ein flacher, mit Einschnitten (8) versehener Schubriegel (7) frei eingesetzt ist, der in einem in der Abschlussprofilstirnwand (1a) vorgesehenen, axialen Schlitz (9) senkrecht zur Welle (2) führbar ist, und dass das Zwischenlager (3) einen Teilzahnkranz (10) aufweist, dessen Zähne (11, 12, 13) in die Einschnitte (8) des Schubriegels (7) eingreifen.

2. Verschlussvorrichtung nach Patentanspruch 1, dadurch gekennzeichnet, dass der Teilzahnkranz (10) drei Zähne (11, 12, 13) aufweist, wobei der Teilungswinkel (α) zweier benachbarter Zäh- ne (11, 12; 12, 13) 72° beträgt.

3. Verschlussvorrichtung nach Patentanspruch 2, dadurch gekennzeichnet, dass der mittlere Zahn vollständig ausgebildet ist, wogegen die beiden äusseren Zähne (11, 13) jeweils nur eine dem mittleren Zahn (12) zugewandte Zahnflanke aufweisen.

4. Verschlussvorrichtung nach einem der voran- gehenden Patentansprüche, dadurch gekenn- zeichnet, dass der Zahnkranz (10) und der Schubriegel (7) aus vergütetem Stahl bestehen.

5. Verschlussvorrichtung nach Patentanspruch 1, dadurch gekennzeichnet, dass das Abschlussprofil (1) aus einer Aluminiumlegierung besteht und an der vorderen (1b) sowie der hinteren (1c) Wand je eine Längskerbe (14) zur Anbringung von Hohlnieten besitzt.

6. Verschlussvorrichtung nach Patentanspruch 5, dadurch gekennzeichnet, dass im Innern des Abschlussprofils (1) ein zum Lagern der Vertikalwelle (2) bestimmter, axial geschlitzter Innenteil (19) vorgesehen ist, der im Bereich des im Abschlussprofils (1) eingesetzten Schubriegels (7) an der hinteren Abschlussprofilwand (1c) abgetragen ist, um die Hin- und Herbewegung des an der hinteren Abschlussprofilwand (1c) anliegenden Schubriegels (7) zu erlauben.

7. Verschlussvorrichtung nach Patentanspruch 6, dadurch gekennzeichnet, dass in der Nähe der Abschlussprofilstirnwand (1a) der Innenteil (19) zwei kanalförmige Aussparungen (20) aufweist.

8. Verschlussvorrichtung nach Patentanspruch 5, dadurch gekennzeichnet, dass das Abschlussprofil (1) an seiner Stirnwand (1a) die seitlich abgesetzte, parallel zur Aussenfläche der vorderen Wand (1b) des Abschlussprofils (1), jedoch in Gegenrichtung zu derselben verlaufende Rippe (18) aufweist.

**Claims**

1. Locking device for hinged sidewalls of a means of transportation, particularly of a tractor- trailer, with a vertical shaft (2) which is rotatably mounted in a profile section (1) of substantially U-shaped cross-section terminating the sidewalls (16) and has at least one intermediate bearing (3), and with a holding piece (5), running perpendicular to the shaft (2) and made in one piece with the intermediate bearing (3), of a locking lever (4) which is secured to the holding piece (5) swing- ably down in a vertical plane, and the free end portion (4a) of which is swivellable in behind a loop (6) secured to one sidewall of the sidewalls (16), the holding piece (5) being swivellable out to a limited extent in a horizontal plane in a recess (17) in the front end-profile-section wall (1b) through the operation of the locking lever (4), characterized in that there is freely inserted in the end profile section (1) a flat sliding bolt (7) provided with indentations (8) which is guidable perpendicular to the shaft (2) in an axial slot (9) provided in the end-profile-section face wall (1a), and that the intermediate bearing (3) has a partial toothed ring (10), the teeth (11, 12, 13) of which engage the indentations (8) of the sliding bolt (7).

2. Locking device according to patent claim 1, characterized in that the partial toothed ring (10) has three teeth (11, 12, 13), the pitch angle (α) of two adjacent teeth (11, 12; 12, 13) amounting to 72°.

3. Locking device according to patent claim 2, characterized in that the middle tooth is completely formed, whereas the two outer teeth (11, 13) each have only one tooth flank facing the middle tooth (12).

4. Locking device according to one of the preceding patent claims, characterized in that the toothed ring (10) and the sliding bolt (7) are made of quenched and tempered steel.

5. Locking device according to patent claim 1, characterized in that the end profile section (1) is made of an aluminium alloy and has one longitudinal notch (14) each on the front wall (1b) as well as on the rear wall (1c).

6. Locking device according to patent claim 5, characterized in that there is provided inside the end profile section (1) an axially slotted inner portion (19), intended for supporting the vertical shaft (2), which portion is removed on the rear end-profile-section wall (1c) in the region of the sliding bolt (7) inserted in the end profile section (1) in order to permit the back-and-forth movement of the sliding bolt (7) resting against the rear end-profile-section wall (1c).

7. Locking device according to patent claim 6, characterized in that the inner portion (19) has two channel-shaped recesses (20) in the vicinity of the end-profile-section face wall (1a).

8. Locking device according to patent claim 5, characterized in that the end profile section (1) has on its face wall (1a) a laterally offset rib (18) running parallel to the outer surface of the front wall (1b) of the end profile section (1) but in the opposite direction thereto.

**Revendications**

1. Dispositif de verrouillage pour panneaux rabattables d'un moyen de transport, en particulier d'un camion à remorque, comprenant un arbre vertical (2) monté de façon pivotante dans un profilé à section en forme de U (1) qui termine les panneaux rabattables (16), cet arbre vertical présentant au moins une pièce-palier intermédiaire (3), et, faisant corps avec cette pièce-palier intermédiaire et s'étendant perpendiculairement à l'arbre (2), une pièce de maintien (5) tenant un levier de verrouillage (4) qui est fixé de façon verticalement relevable à cette pièce de maintien (5) et dont l'extrémité libre (4a) est engageable derrière une boucle (6) fixée à une plaque des panneaux (16), la pièce de maintien (5) étant apte à tourner d'une façon limitée, par l'actionnement du levier de verrouillage (4), dans un plan horizontal, dans un logement (17) ménagé dans l'aile avant (1b) du profilé de terminaison, caractérisé en ce qu'un pêne de verrouillage (7), plat et muni de creusures (8), est engagé librement dans le profilé de terminaison (1), ce pêne pouvant être mené perpendiculairement à l'arbre (2) dans une fente axiale (9) ménagée dans la paroi avant (1a) du profilé de terminaison, et en ce que la pièce-palier intermédiaire (3) présente une couronne partielle de denture (10) dont les dents (11, 12, 13) s'engagent dans les creusures (8) du pêne de verrouillage (7).

2. Dispositif de verrouillage selon la revendication 1, caractérisé en ce que la couronne partielle de denture (10) présente trois dents (11, 12, 13), l'angle de division (α) entre deux dents voisines (11, 12; 12, 13) se montant à 72°.

3. Dispositif de verrouillage selon la revendication 2, caractérisé en ce que la dent médiane est complètement formée, tandis que les deux dents extérieures (11, 13) présentent chacune seulement un flanc de dent dirigé vers la dent médiane (12).

4. Dispositif de verrouillage selon une des revendications précédentes, caractérisé en ce que la couronne de denture (10) et le pêne de verrouillage (7) consistent en de l'acier amélioré.

5. Dispositif de verrouillage selon la revendication 1, caractérisé en ce que le profilé de terminaison (1) consiste en un alliage d'aluminium et comprend, sur son aile avant (1b), de même que sur son aile arrière (1c) une encoche longitudinale (14) pour la mise en place de rivets creux.

6. Dispositif de verrouillage selon la revendication 5, caractérisé en ce que, dans l'intérieur du profilé de terminaison (1), se trouve une partie intérieure creusée axialement (19) destinée à servir de palier à l'arbre vertical (2), cette partie (19) étant enlevée de l'aile arrière (1c) du profilé de terminaison dans la zone où le pêne de verrouillage (7) est engagé dans le profilé (1), afin de permettre le mouvement de va-et-vient du pêne de verrouillage (7) qui est en appui contre l'aile arrière (1c) du profilé de terminaison.

7. Dispositif de verrouillage selon la revendication 6, caractérisé en ce que, au voisinage de la paroi frontale (1a) du profilé de terminaison, la partie intérieure (19) présente deux creusures (20) en forme de canal.

8. Dispositif de verrouillage selon la revendication 5, caractérisé en ce que le profilé de terminaison (1) présente, à l'endroit de sa paroi frontale (1a), une ailette (18) latéralement décalée et se projetant parallèlement à la surface extérieure de l'aile avant (1b) du profilé de terminaison (1), mais dans la direction inverse de celle-ci.

FIG. 1

22  21
23  24

26  1
24a
14

1a
2

16

9
15
17

III
II
III
4
7

III
II
3
24a
4a
6

FIG. 2

7  8  12  3  1c  5  1  25
1a
11  20  10
4
4a  6

FIG. 3

α
12
13
11
5
10

0 073 285

# FIG. 4

## FIG. 5

FIG. 6

FIG. 7

FIG. 8

FIG . 10

FIG. 9

15

0 073 285